# EUROPÄISCHE PATENTSCHRIFT

(11) **EP 2 106 871 B1**
(45) Veröffentlichungstag und Bekanntmachung des Hinweises auf die Patenterteilung: **31.12.2014**
(21) Anmeldenummer: 09004633.5
(22) Anmeldetag: 31.03.2009
(51) Int. Cl.: B23D 49/16, B23D 51/02

(54) **Stichsäge mit Führungsfinne**
Fret saw with guide fin
Scie sauteuse dotée d'une panne de guidage

(30) Priorität: 02.04.2008 DE 102008016765
(43) Veröffentlichungstag der Anmeldung: 07.10.2009
(73) Patentinhaber: Metabowerke GmbH, 72622 Nürtingen (DE)
(72) Erfinder: Baumann, Martin, 73728 Esslingen (DE); Zendath, Thomas, 72555 Metzingen (DE)
(74) Vertreter: Raunecker, Klaus Peter

(56) Entgegenhaltungen:
- DE-A1- 4 104 296
- DE-A1- 10 300 793
- DE-C2- 3 021 801
- GB-A- 2 042 975

## Beschreibung

Die Erfindung betrifft eine motorisch angetriebene handgeführte Stichsäge mit einem Maschinengehäuse und mit einer werkstückzugewandten Führungsplatte, über die das Stichsägenblatt hin- und hergehend antreibbar vorsteht, wobei an der werkstückzugewandten Seite der Führungsplatte eine Führungsfinne lösbar anbringbar ist, welche dem Stichsägenblatt in Arbeitsrichtung nachgeordnet ist und in den Sägespalt eingreift, wobei die Führungsfinne in einer Vertiefung oder Ausnehmung in der Führungsplatte gehalten ist.

Eine solche Stichsäge ist beispielsweise bekannt aus DE 30 21 801 C2. Gemäß DE 103 00 793 A1 ist eine Stichsäge mit einem nur geringfügig über die Führungsplatte vorstehenden Führungsvorsprung bekannt, der dazu dient, in eine vorgegebene Führungsnut auf der Oberfläche des Werkstücks einzugreifen, um die Stichsäge zu führen.

Der vorliegenden Erfindung liegt die Aufgabe zugrunde, eine Stichsäge der eingangs genannten Art weiter dahingehend zu verbessern, dass die Führungsfinne einerseits komfortabel in ihrer bestimmungsgemäßen Arbeitsposition angeordnet werden kann, ohne eine Vielzahl von Handgriffen oder gar Werkzeuge zu erfordern. Weiter soll die Führungsfinne ebenso komfortabel lösbar sein, und es soll möglichst verhindert werden, dass die Führungsfinne verloren geht, wenn sie nicht benötigt wird.

Diese Aufgabe wird bei einer Stichsäge der gattungsgemäßen Art erfindungsgemäß dadurch gelöst, dass die Führungsfinne und die Vertiefung oder Ausnehmung in der Führungsplatte so ausgebildet sind, dass die Führungsfinne in zwei verschiedenen Orientierungen zur Ebene der Führungsplatte jeweils formschlüssig in der Vertiefung oder Ausnehmung in der Führungsplatte anordenbar ist, wobei sie in der einen Orientierung mit ihrem finnenförmigen Führungsabschnitt über die Führungsplatte vorsteht und bestimmungsgemäß verwendbar ist und in der anderen Orientierung nicht über die Führungsplatte vorsteht und sich in einer unverlierbaren Verstaustellung befindet.
Die Führungsfinne ist also aus der Vertiefung oder Ausnehmung in der Führungsplatte entnehmbar, wenn die Stichsäge ohne Verwendung dieses "Führungshilfsmittels" eingesetzt werden soll. Die Führungsfinne kann dann beispielsweise beiseite gelegt oder in der Hosentasche des Benutzers mitgeführt werden, was jedoch die Gefahr des Verlorengehens erhöht. Daher wird erfindungsgemäß vorgeschlagen, dass die Führungsfinne, nachdem sie entnommen wurde, in eine andere Orientierung zur Ebene der Führungsplatte gedreht wird und wieder in die Vertiefung oder Ausnehmung angeordnet und dort formschlüssig gehalten wird. In dieser im Vergleich zu ihrer Arbeitsstellung verschwenkten oder verdrehten Orientierung steht die Führungsfinne nicht über die Führungsplatte vor. Die Stichsäge kann dann in herkömmlicher Weise verwendet werden. Zugleich ist aber sichergestellt, dass die Führungsfinne unverlierbar mit der Stichsäge mitgeführt wird. Die Gefahr, dass die Führungsfinne verloren geht, besteht daher nicht mehr. Hierdurch ist die Handhabbarkeit der Stichsäge und ihrer Komponenten wesentlich verbessert.

Beispielsweise wäre es denkbar, dass die Führungsfinne aus ihrer bestimmungsgemäßen Arbeitsposition entnommen und dann um 90° gedreht wird, so dass die Ebene des finnenförmigen Führungsabschnitts im Wesentlichen parallel zur Ebene der Führungsplatte ist, und dass die Führungsfinne dann in dieser Orientierung in die Vertiefung oder Ausnehmung in der Führungsplatte einsetzbar ist. Nach dieser Ausführungsform kann die Vertiefung oder Ausnehmung in der Führungsplatte auch verhältnismäßig flach ausgebildet sein. Bevorzugt wird jedoch eine Ausführungsform, bei der die beiden genannten Orientierungen - der aktiven Arbeitsstellung und der inaktiven Verstaustellung - einander entgegengesetzt sind. Die Führungsfinne wird solchenfalls entnommen und um 180° gedreht und wieder in die Ausnehmung oder Vertiefung eingesetzt, in der sie dann formschlüssig gehalten wird. Die Führungsfinne zeigt dann vom Werkstück weg in Richtung auf das Maschinengehäuse der Stichsäge.

Nach einem weiteren Erfindungsgedanken, für den ebenfalls unabhängig von der Anordnung der Führungsfinne in den beiden Orientierungen Schutz in Anspruch genommen wird, ist die Führungsfinne durch ein gegenüber der Führungsplatte manuell verstellbares Mittel formschlüssig und unverlierbar an der Führungsplatte gehalten. Vorzugsweise umfasst das gegenüber der Führungsplatte verstellbare Mittel einen Schieber. Auf diese Weise wird also durch einfache Verstellung des Mittels, vorzugsweise durch eine lineare Stell- oder Verschiebebewegung, die formschlüssige Halterung der Führungsfinne einerseits und die Freigabe der Führungsfinne andererseits erreicht.

Nach einem weiteren Erfindungsgedanken erweist es sich als vorteilhaft, wenn das gegenüber Führungsplatte verstellbare Mittel in Arbeitsrichtung der Stichsäge, also in Richtung des Sägeschnitts oder entgegengesetzt, stellbar ist.

Weiter erweist es sich als vorteilhaft, wenn das gegenüber der Führungsplatte verstellbare Mittel in eine Richtung vorgespannt ist, wobei hier insbesondere eine Feder, aber auch ein sonstiges elastisches Mittel in Frage kommt. Die Betätigung des manuell verstellbaren Mittels erfolgt dann entgegen der Vorspannung, wobei das Mittel solchenfalls aufgrund seiner Vorspannung stets selbsttätig in eine End-oder Anschlagstellung zurückbewegt wird.

Als besonders vorteilhaft erweist es sich, wenn bei Betätigung des gegenüber der Führungsplatte verstellbaren Mittels die Führungsfinne schwerkraftbedingt aus der Vertiefung oder Ausnehmung bei der Führungsplatte herausfallbar ausgebildet ist, und zwar ohne dass weitere Hilfsmittel angewandt werden müssten oder der Benutzer mit den Fingern der anderen Hand nachgreifen müsste. Die andere Hand kann vielmehr zum Auffangen der aus der Vertiefung oder Ausnehmung fallenden Führungsfinne verwendet werden.

Weiter wird vorgeschlagen, dass das gegenüber Führungsplatte verstellbare Mittel auf der werkstückabgewandten Seite der Führungsplatte vorgesehen ist. Dies gestaltet die Führung und Unterbringung des Mittels einfacher, und die Stabilität der Führungsplatte als Ganzes wird weniger beeinträchtigt. Hierfür erweist es sich als vorteilhaft, wenn auf der werkstückabgewandten Seite der Führungsplatte eine für das verstellbare Mittel gehäusebildende, vorzugsweise metallische Komponente ausgebildet ist. Diese gehäusebildende Komponente könnte beispielsweise insbesondere zusammen mit der Führungsplatte eine tunnel- oder röhrenförmige Aufnahme für das verstellbare Mittel bilden.

Die genannte gehäusebildende Komponente kann auf der werkstückabgewandten Seite der Führungsplatte eine Bauhöhe von 10 bis 30 mm, insbesondere von 10 bis 25 mm und weiter insbesondere von 10 bis 20 mm aufweisen. Dieser Bereich oberhalb der Führungsplatte und in Bearbeitungsrichtung dem Stichsägeblatt nachgeordnet steht typischerweise für die vorstehend genannten Bauhöhen zur Verfügung, so dass diese ohne weiteres vorgesehen werden können. Somit steht ausreichend Bauraum für eine kostengünstige und stabile sowie zweckmäßige und handhabbare Ausbildung des verstellbaren Mittels zur Verfügung.

Vorteilhafterweise ist das gegenüber der Führungsplatte verstellbare Mittel als Kunststoffspritzteil ausgebildet, was eine komplexe Ausbildung bei moderaten Herstellkosten zulässt.

Das gegenüber der Führungsplatte verstellbare Mittel könnte in an sich beliebiger unmittelbarer oder mittelbarer Weise manuell betätigt werden. Es erweist sich indessen als vorteilhaft, wenn das Mittel eine Drückerfläche aufweist und durch manuellen Druck auf diese Drückerfläche in Stellrichtung des Mittels direkt betätigbar ist. Auf diese Weise müssen keine die Stellkraft umlenkenden Mittel vorgesehen werden, sondern der Benutzer drückt gewissermaßen direkt in Stellrichtung auf das Mittel und führt somit die Stellbewegung aus.

Es erweist sich weiter als zweckmäßig und vorteilhaft, wenn die Führungsfinne ein plattenförmiges Halteteil umfasst, welches solchenfalls vorzugsweise mit seiner Plattenebene senkrecht zur Ebene des finnenförmigen Führungsabschnitts der Führungsfinne erstreckt ist. Das plattenförmige Halteteil kann dann die formschlüssige Anordnung der Führungsfinne in der Vertiefung oder Ausnehmung bewirken, indem es in geeigneter Weise mit dem manuell verstellbaren Mittel formschlüssig zusammenwirkt. Hierfür erweist es sich als vorteilhaft, wenn die Führungsfinne oder ein plattenförmiges Halteteil der Führungsfinne formschlüssig untergreifbare Abschnitte aufweist, die insbesondere seitlich vorstehend ausgebildet sind.

Weiter erweist es sich als vorteilhaft, wenn das gegenüber der Führungsplatte verstellbare Mittel eine Öffnung aufweist, in welche die Führungsfinne einlegbar ist und durch welche die Führungsfinne in der Verstaustellung mit ihrem finnenförmigen Führungsabschnitt hindurchgreift. In diesem Fall kann das verstellbare Mittel und die Führungsfinne bzw. die Vertiefung oder Ausnehmung in der Führungsplatte derart miteinander zusammenwirken, dass die Führungsfinne in die Vertiefung oder Ausnehmung einsetzbar ist, wenn das verstellbare Mittel, insbesondere entgegen der Federkraft, betätigt wird. Wenn das Mittel manuell oder federkraftbedingt in Richtung auf seine unbetätigte Stellung zurückbewegt wird, so gleitet es gegenüber der Führungsfinne, die im Wesentlichen unverschieblich in der Vertiefung oder Ausnehmung der Führungsplatte gehalten ist. Dabei gerät das stellbare Mittel in eine Hintergriffsstellung mit der Führungsfinne, was die formschlüssige Anordnung der Führungsfinne in der Vertiefung oder Ausnehmung bewirkt.

Ferner erweist es sich als vorteilhaft, wenn die Führungsfinne in die Vertiefung oder Ausnehmung senkrecht zur Ebene der Führungsplatte einsetzbar ist und darin vorzugsweise unverschieblich angeordnet ist. Es wäre jedoch auch eine Ausführungsform denkbar, bei der die Führungsfinne durch das Mittel in eine Hintergriffsstellung verschiebbar ist.

Weiter wird vorgeschlagen, dass die Führungsfinne oder ein plattenförmiges Halteteil der Führungsfinne in ihrer unverlierbaren Verstaustellung im wesentlichen flächenbündig zur werkstückzugewandten Oberseite der Führungsplatte angeordnet ist.

Weitere Merkmale, Vorteile und Einzelheiten der Erfindung ergeben sich aus den beigefügten Patentansprüchen und der zeichnerischen Darstellung und nachfolgenden Beschreibung einer bevorzugten Ausführungsform der erfindungsgemäßen Stichsäge. In der Zeichnung zeigt:
- Figur 1: eine Seitenansicht einer erfindungsgemäßen Stichsäge mit einer Führungsfinne;
- Figur 2: eine Ansicht der Führungsplatte der erfindungsgemäßen Stichsäge von unten;
- Figur 3: eine Schnittansicht mit Schnittebene B-B in Figur 2;
- Figur 4: eine Seitenansicht der Führungsplatte nach Figur 2;
- Figur 5: eine Längsschnittansicht mit Schnittebene C-C in Figur 2;
- Figur 6: eine Schnittansicht mit Schnittebene A-A in Figur 2;
- Figuren 7a - c: Ansichten der Führungsfinne von unten, von der Seite und von vorn.

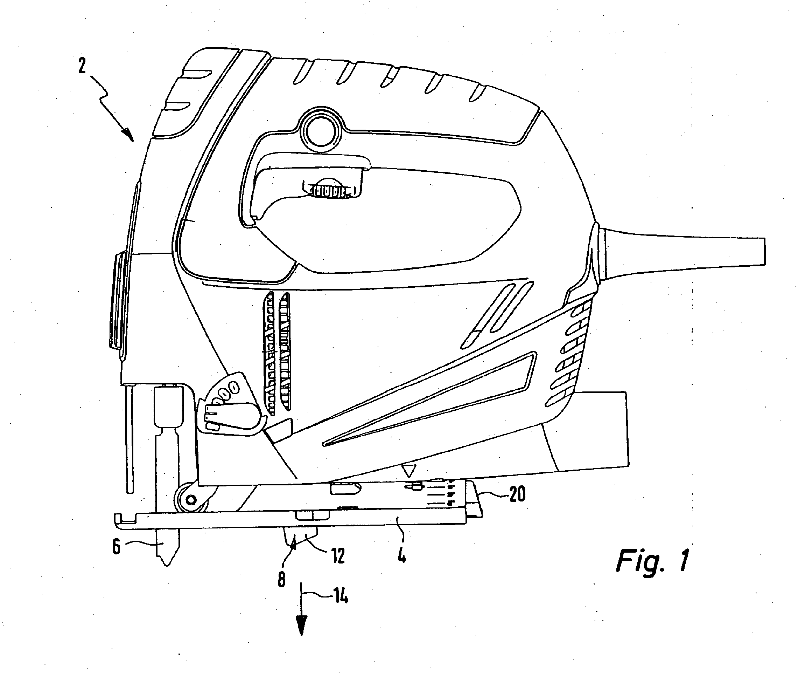

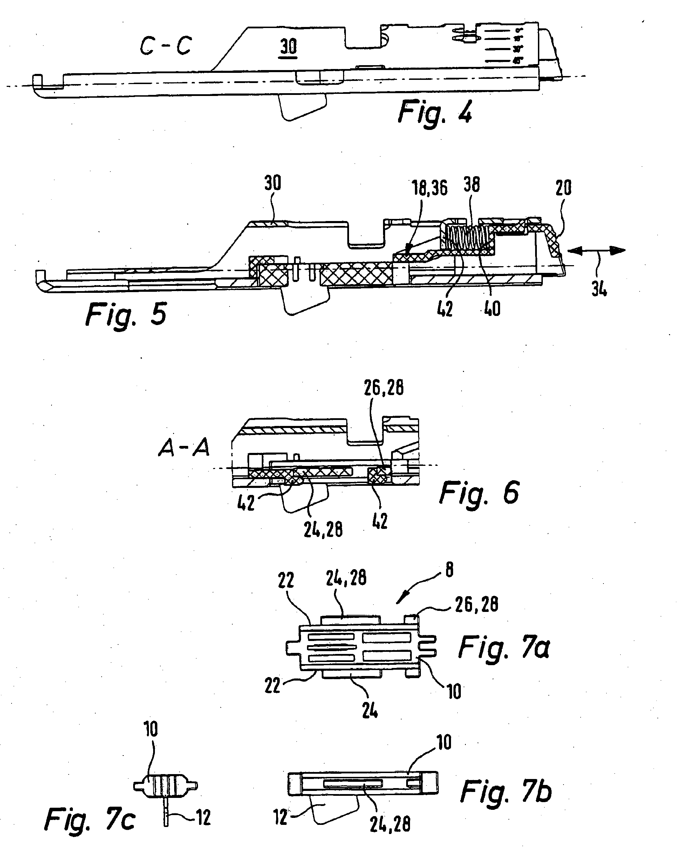

Figur 1 zeigt eine insgesamt mit dem Bezugszeichen 2 bezeichnete erfindungsgemäße Stichsäge mit einer Führungsplatte 4, einem im Wesentlichen senkrecht über die Führungsplatte 4 vorstehenden, hin- und hergehend antreibbaren Stichsägenblatt 6 und mit einer Führungsfinne 8, welche in der Arbeitsrichtung der Stichsäge dem Stichsägenblatt 6 nachgeordnet ist und in den Sägespalt eingreift. Die Führungsfinne 8 ist in den Figuren 7a bis c in verschiedenen Ansichten dargestellt. Sie umfasst ein plattenförmiges Halteteil 10 und einen finnenförmigen Führungsabschnitt 12, die mit ihren Ebenen senkrecht zueinander angeordnet und vorzugsweise unlösbar miteinander verbunden sind.

Erfindungsgemäß ist die Führungsfinne 8 in zwei unterschiedlichen Orientierungen an der Führungsplatte 4 anordenbar, nämlich in einer ersten Orientierung, welche die Arbeitsstellung der Führungsfinne 8 bedeutet und in den Figuren dargestellt ist, und in einer zweiten Orientierung, die der in den Figuren dargestellten Orientierung diametral entgegengesetzt und gestrichelt in Figur 1 angedeutet ist. Die Führungsfinne ist aus der in den Figuren dargestellten Arbeitsstellung in Richtung des Doppelpfeils 14 aus einer Ausnehmung 16 in der Führungsplatte 4 entnehmbar. Sie kann dann um 180° gedreht und sodann mit dem finnenförmigen Führungsabschnitt 12 voraus wieder in die Ausnehmung 16 eingesetzt werden. Der finnenförmige Führungsabschnitt 12 der Führungsfinne 8 erstreckt sich dann durch die Führungsplatte 4 hindurch nach oben in Richtung auf ein Maschinengehäuse der Stichsäge 2. Dies stellt dann die Verstaustellung der Führungsfinne 8 dar. Sowohl in der Arbeitsstellung als auch in der Verstaustellung ist die Führungsfinne 8 auf noch näher zu beschreibende Weise formschlüssig in der Ausnehmung 16 der Führungsplatte 4 gehalten. Hierfür ist ein noch näher zu beschreibendes gegenüber der Führungsplatte 4 verstellbares Mittel 18 mit einer manuellen Drückerfläche 20 auf der vom Werkstück abgewandten Seite der Führungsplatte 4 vorgesehen.

Zunächst wird anhand der Figuren 7a bis 7c die Führungsfinne 8 beschrieben. Das plattenförmige Halteteil 10, das beispielsweise aus Kunststoff gebildet sein kann, umfasst in diesem Fall eine stabilisierende verripte Struktur, welche dem Halteteil 10 eine Verwindungsstabilität verleiht. An zwei gegenüberliegenden Schmalseiten 22 weist das plattenförmige Halteteil jeweils eine in Richtung der Schmalseiten 22 erstreckte Rippe 24 und einen Vorsprung 26 auf, welche formschlüssig untergreifbare Abschnitte 28 bilden, um die Führungsfinne 8 in der Ausnehmung 16 formschlüssig zu halten. Von dem Halteteil 10 steht senkrecht der finnenförmige Führungsabschnitt 12 ab, der vorzugsweise aus Metall gebildet ist.

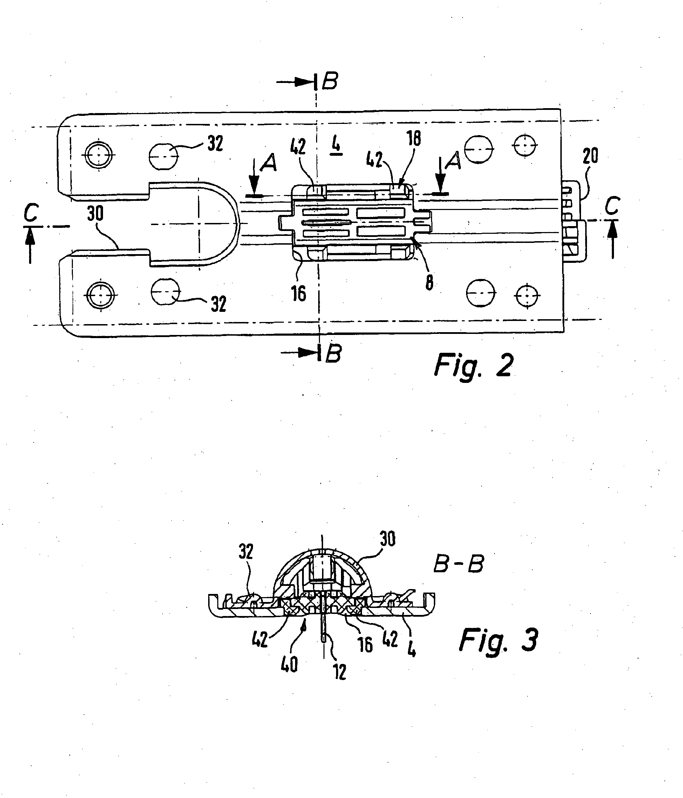

Die Führungsplatte 4 ist im Wesentlichen flächenhaft erstreckt und umfasst eine in Arbeitsrichtung erstreckte Ausnehmung 30 für das Stichsägenblatt 6 und die schon erwähnte Ausnehmung 16, in welche die Führungsfinne 8, wie in den Figuren 2 bis 6 dargestellt, einsetzbar ist.

Auf der vom Werkstück abgewandten Seite der Führungsplatte 4 ist eine gehäusebildende Komponente 30 (Figuren 3 bis 5) vorgesehen, die eine röhren- oder tunnelförmige Aufnahme für das gegenüber der Führungsplatte 4 manuell verstellbare Mittel 18 bildet. Diese gehäusebildende Komponente 30 ist vorzugsweise ausgehend von einer Metallplatte ausgebildet, die in die aus Figur 3 ersichtliche Gestalt gebracht wurde und stoffschlüssig mit der Führungsplatte 4 über nietartige Verbindungsmittel 32 verbunden ist. Innerhalb dieser gehäusebildenden Komponente 30 ist das manuell verstellbare Mittel 18 längsverschieblich, also in Richtung des Doppelpfeils 34 verschieblich, vorgesehen. Das Mittel 18 ist von einem im beispielhaft dargestellten Fall einstückigen Teil in Form eines Schiebers 36 mit der schon erwähnten manuellen Drückerfläche 20 gebildet. Die Drückerfläche 20 könnte aber auch von einem separaten Teil gebildet sein. Der Schieber 36 ist durch eine Feder 38 in eine Stellrichtung (Richtung des Doppelpfeils 34) vorgespannt, wobei sich die Feder 38 zwischen einer Abstufung 40 des Schiebers 36 und einem abgekanteten Abschnitt 42 der gehäusebildenden Komponente 30 abstützt. Bei Ausübung manuellen Drucks auf die Drückerfläche 20 wird der Schieber 36 entgegen der Federkraft in der Figur 5 nach links bewegt.

Das manuell verstellbare Mittel 18, d. h. der Schieber 36, weist eine Öffnung 40 auf, die am besten aus Figur 3 ersichtlich ist, in welche Öffnung die Führungsfinne einsetzbar ist, wenn der Schieber durch Druck auf die Drückerfläche 20 in Figur 5 nach links bewegt wurde. Der Schieber 36 umfasst weiter in diese Öffnung 40 einkragende untergreifende Abschnitte 42, welche mit den untergreifbaren Abschnitten 28 des Halteteils 10 der Führungsfinne 8 zusammenwirken (Figuren 3 und 6). Wenn der Schieber 36 betätigt ist, so lässt sich die Führungsfinne 8 mit ihrem plattenförmigen Halteteil 10 durch die Ausnehmung 16 der Führungsplatte 4 hindurch und in die Öffnung 40 des Schiebers 36 einsetzen. Die untergreifenden Abschnitte 42 des Schiebers 36 kollidieren in dieser Stellung des Schiebers 36 nicht mit den untergreifbaren Abschnitten 28 des plattenförmigen Halteteils 10 der Führungsfinne 8. Erst bei Reduzieren des manuellen Drucks auf die Drückerfläche 20 wird der Schieber 36 unter der Wirkung der Feder 38 in der Figur 5 nach rechts bewegt, so dass die untergreifenden Abschnitte 42 des Schiebers 36 die untergreifbaren Abschnitte 28 des Halteteils 10 der Führungsfinne 8 formschlüssig untergreifen. Dabei ist die Führungsfinne 8 bzw. ihr plattenförmiges Halteteil 10 unverschieblich in der Ausnehmung 16 der Führungsplatte 4 aufgenommen. Sie kann so in die in den Figuren dargestellte formschlüssige Anordnung in der Ausnehmung 16 der Führungsplatte 4 gelangen.

Zum Lösen der Führungsfinne 8 wird erneut der Schieber 36 betätigt, die Führungsfinne wird entnommen, um 180° gedreht und mit ihrem finnenförmigen Führungsabschnitt 12 voraus wieder in die Ausnehmung 16 der Führungsplatte 4 und in den Schieber 36 eingesteckt. Dabei zeigt dann der finnenförmige Führungsabschnitt 12 nach oben, und das plattenförmige Halteteil 10 verläuft vorzugsweise flächenbündig zu der werkstückzugewandten Seite der Führungsplatte 4.

## Patentansprüche

1. Motorisch angetriebene handgeführte Stichsäge (2) mit einem Maschinengehäuse und mit einer werkstückzugewandten Führungsplatte (4), über die das Stichsägenblatt (6) hin- und hergehend antreibbar vorsteht, wobei an der werkstückzugewandten Seite der Führungsplatte (4) eine Führungsfinne (8) lösbar anbringbar ist, welche dem Stichsägenblatt (6) in Arbeitsrichtung nachgeordnet ist und in den Sägespalt eingreift, wobei die Führungsfinne (8) in einer Vertiefung oder Ausnehmung (16) in der Führungsplatte (4) gehalten ist, **dadurch gekennzeichnet, dass** die Führungsfinne (8) und die Vertiefung oder Ausnehmung (16) in der Führungsplatte (4) so ausgebildet sind, dass die Führungsfinne (8) in zwei verschiedenen Orientierungen zur Ebene der Führungsplatte (4) jeweils formschlüssig in der Vertiefung oder Ausnehmung (16) in der Führungsplatte anordenbar ist, wobei sie in der einen Orientierung mit ihrem finnenförmigen Führungsabschnitt (12) über die Führungsplatte (4) vorsteht und bestimmungsgemäß verwendbar ist und in der anderen Orientierung nicht über die Führungsplatte (4) vorsteht und sich in einer unverlierbaren Verstaustellung befindet.

2. Stichsäge nach Anspruch 1, **dadurch gekennzeichnet, dass** die Orientierungen einander entgegensetzt sind.

3. Stichsäge nach Anspruch 1 oder 2, **dadurch gekennzeichnet, dass** die Führungsfinne (8) durch ein gegenüber der Führungsplatte (4) manuell verstellbares Mittel (18) formschlüssig und unverlierbar an der Führungsplatte (4) gehalten ist.

4. Stichsäge nach Anspruch 3, **dadurch gekennzeichnet, dass** das gegenüber der Führungsplatte (4) verstellbare Mittel (18) einen Schieber (36) umfasst.

5. Stichsäge nach Anspruch 3 oder 4, **dadurch gekennzeichnet, dass** das gegenüber der Führungsplatte (4) verstellbare Mittel (18) in Arbeitsrichtung (34) der Stichsäge stellbar ist.

6. Stichsäge nach Anspruch 3, 4 oder 5, **dadurch gekennzeichnet, dass** das gegenüber der Führungsplatte (4) verstellbare Mittel (18) in eine Richtung vorgespannt ist, insbesondere durch eine Feder (38).

7. Stichsäge nach einem oder mehreren der Ansprüche 3-5, **dadurch gekennzeichnet, dass** bei Betätigung des gegenüber der Führungsplatte (4) verstellbaren Mittels (18) die Führungsfinne (8) schwerkraftbedingt aus der Vertiefung oder Ausnehmung (16) bei der Führungsplatte (4) herausfallbar ausgebildet ist.

8. Stichsäge nach einem oder mehreren der Ansprüche 3-7, **dadurch gekennzeichnet, dass** das gegenüber der Führungsplatte (4) verstellbare Mittel (18) auf der werkstückabgewandten Seite der Führungsplatte (4) vorgesehen ist.

9. Stichsäge nach Anspruch 8, **dadurch gekennzeichnet, dass** auf der werkstückabgewandten Seite der Führungsplatte (4) eine für das verstellbare Mittel (18) gehäusebildende, vorzugsweise metallische Komponente (30) ausgebildet ist.

10. Stichsäge nach einem oder mehreren der Ansprüche 3-9, **dadurch gekennzeichnet, dass** das gegenüber der Führungsplatte (4) verstellbare Mittel (18) eine Drückerfläche (20) aufweist und durch manuellen Druck auf diese Drückerfläche (20) in Stellrichtung (34) des Mittels (20) direkt betätigbar ist.

11. Stichsäge nach einem der vorstehenden Ansprüche, **dadurch gekennzeichnet, dass** ein plattenförmiges Halteteil (10) der Führungsfinne (8) mit seiner Plattenebene senkrecht zur Ebene des finnenförmigen Führungsabschnitts (12) der Führungsfinne (8) erstreckt ist.

12. Stichsäge nach einem oder mehreren der vorstehenden Ansprüche, **dadurch gekennzeichnet, dass** die Führungsfinne (8) oder ein plattenförmiges Halteteil (10) der Führungsfinne (8) formschlüssig untergreifbare Abschnitte (28) aufweist, die insbesondere seitlich vorstehend ausgebildet sind.

13. Stichsäge nach einem oder mehreren der Ansprüche 3-12, **dadurch gekennzeichnet, dass** das gegenüber der Führungsplatte (4) verstellbare Mittel (18) eine Öffnung (40) aufweist, in welche die Führungsfinne (8) einlegbar ist und durch welche die Führungsfinne in der Verstaustellung mit ihrem finnenförmigen Führungsabschnitt (12) hindurchgreift.

14. Stichsäge nach einem oder mehreren der vorstehenden Ansprüche, **dadurch gekennzeichnet, dass** die Führungsfinne (8) in die Vertiefung oder Ausnehmung (16) senkrecht zur Ebene der Führungsplatte (4) einsetzbar ist und darin insbesondere unverschieblich angeordnet ist.

15. Stichsäge nach einem oder mehreren der vorstehenden Ansprüche, **dadurch gekennzeichnet, dass** die Führungsfinne (8) oder ein plattenförmiges Halteteil (10) der Führungsfinne (8) in ihrer unverlierbaren Verstaustellung im wesentlichen flächenbündig zur werkstückzugewandten Oberseite der Führungsplatte (4) angeordnet ist.

## Claims

1. Motor-driven, hand-guided compass saw (2) with a machine housing and with a guide plate (4) which faces towards the workpiece and beyond which the compass saw blade (6) protrudes so as to be drivable in a reciprocating manner, wherein there can be fitted in a detachable manner to that side of the guide plate (4) which faces towards the workpiece a guide fin (8) which is arranged after the compass saw blade (6) in the direction of working and which engages in the sawing gap, and wherein said guide fin (8) is held in an indentation or recess (16) in the guide plate (4),
**characterised in that**
the guide fin (8) and the indentation or recess (16) in the guide plate (4) are designed in such a way that said guide fin (8) can be arranged in said indentation or recess (16) in the guide plate in two different orientations in relation to the plane of said guide plate (4) in a form-locking manner in each case, wherein, in one orientation, said guide fin protrudes, by its fin-shaped guide section (12), beyond the guide plate (4) and can be used as intended and, in the other orientation, said guide fin does not protrude beyond the guide plate (4) and is located in a captive stowed-away position.

2. Compass saw according to Claim 1, **characterised in that** the orientations are mutually opposed.

3. Compass saw according to Claim 1 or 2, **characterised in that** the guide fin (8) is held on the guide plate (4) in a form-locking and captive manner by a means (18) which is manually adjustable in relation to said guide plate (4).

4. Compass saw according to Claim 3, **characterised in that** the means (18) which is adjustable in relation to the guide plate (4) comprises a slide (36).

5. Compass saw according to Claim 3 or 4, **characterised in that** the means (18) which is adjustable in relation to the guide plate (4) can be set in the direction of working (34) of the compass saw.

6. Compass saw according to Claim 3, 4 or 5, **characterised in that** the means (18) which is adjustable in relation to the guide plate (4) is pretensioned in one direction, particularly by a spring (38).

7. Compass saw according to one or more of Claims 3 to 5, **characterised in that** the guide fin (8) is designed so as to be capable of falling out of the indentation or recess (16) in the guide plate (4) in a gravity-induced manner when the means (18) which is adjustable in relation to said guide plate (4) is actuated.

8. Compass saw according to one or more of Claims 3 to 7, **characterised in that** the means (18) which is adjustable in relation to the guide plate (4) is provided on that side of said guide plate (4) which faces away from the workpiece.

9. Compass saw according to Claim 8, **characterised in that** a, preferably metallic, component (30) which forms a housing for the adjustable means (18) is constructed on that side of the guide plate (4) which faces away from the workpiece.

10. Compass saw according to one or more of Claims 3 to 9, **characterised in that** the means (18) which is adjustable in relation to the guide plate (4) has a pusher surface (20) and can be directly actuated by manual pressure on the said pusher surface (20) in the direction of setting (34) of said means (18).

11. Compass saw according to one of the preceding claims, **characterised in that** a plate-shaped holding part (10) belonging to the guide fin (8) is extended with the plane of its plate perpendicular to the plane of the fin-shaped guide section (12) of said guide fin (8).

12. Compass saw according to one or more of the preceding claims, **characterised in that** the guide fin (8), or a plate-shaped holding part (10) belonging to said guide fin (8), has sections (28) under which it is possible to engage in a form-locking manner and which are designed so as to protrude, in particular laterally.

13. Compass saw according to one or more of Claims 3 to 12, **characterised in that** the means (18) which is adjustable in relation to the guide plate (4) has an aperture (40) in which the guide fin (8) can be placed and through which said guide fin engages with its fin-shaped guide section (12) when in the stowed-away position.

14. Compass saw according to one or more of the preceding claims, **characterised in that** the guide fin (8) can be inserted in the indentation or recess (16), perpendicularly to the plane of the guide plate (4), and is arranged, particularly in a non-displaceable manner, therein.

15. Compass saw according to one or more of the preceding claims, **characterised in that** the guide fin (8), or a plate-shaped holding part (10) belonging to said guide fin (8), is arranged, when in its captive stowed-away position, substantially flush with the surface in relation to that upper side of the guide plate (4) which faces towards the workpiece.

## Revendications

1. Scie sauteuse à entraînement électrique guidée manuellement (2) comportant un boîtier de machine et une plaque de guidage (4) tournée vers la pièce de travail, par rapport à laquelle la lame de scie sauteuse (6) entrainée en va-et-vient peut se déplacer, dans laquelle une panne de guidage (8) est montée de façon amovible sur la face orientée vers la pièce de travail de la plaque de guidage (4), laquelle est disposée dans le prolongement de la lame de scie sauteuse (6) dans la direction de travail et est traversée par la fente de la découpe, dans laquelle la panne de guidage (8) est maintenue dans une creusure ou un évidement (16) ménagé dans la plaque de guidage (4), **caractérisée en ce que**, la panne de guidage (8) et la creusure ou l'évidement (16) sont ménagés dans la plaque de guidage (4) de telle manière que la panne de guidage (8) soit orientable selon deux directions distinctes par rapport à la surface de la plaque de guidage (4) et respectivement engagé dans la creusure ou l'évidement (16) par couplage de forme, dans laquelle, dans la première orientation elle est protubérante par rapport à la plaque de guidage (4) par sa section de guidage (12) constituant la panne et utilisable selon les besoins, et dans la seconde orientation elle n'est pas protubérante par rapport à la plaque de guidage (4) et se trouve dans une position escamotée en vue de la rendre imperdable.

2. Scie sauteuse selon la revendication 1, **caractérisé en ce que** les orientations sont opposées l'une par rapport à l'autre.

3. Scie sauteuse selon les revendications 1 ou 2, **caractérisée en ce que** la panne de guidage (8) est maintenue contre la plaque de guidage (4) par couplage de forme et en position imperdable par un moyen (18) réglable en position manuellement par rapport à la plaque de guidage (4).

4. Scie sauteuse selon la revendication 3, **caractérisée en ce que** le moyen (18) réglable en position manuellement par rapport à la plaque de guidage (4) comporte un coulisseau (36).

5. Scie sauteuse selon les revendications 3 ou 4, **caractérisée en ce que** le moyen (18) réglable en position manuellement par rapport à la plaque de guidage (4) peut être mis dans le sens de travail (34) de la scie sauteuse.

6. Scie sauteuse selon les revendications 3, 4 ou 5, **caractérisée en ce que** le moyen (18) réglable en position manuellement par rapport à la plaque de guidage (4) peut être amené de manière préréglée dans un des sens, en particulier par un ressort (38).

7. Scie sauteuse selon l'une des revendications 3-5, **caractérisée en ce que** lors de l'actionnement du moyen (18) réglable en position manuellement par rapport à la plaque de guidage (4), la panne de guidage (8) peut être sortie par application d'une force de pivotement, hors de la creusure ou l'évidement (16) de la plaque de guidage (4).

8. Scie sauteuse selon l'une des revendications 3-7, **caractérisée en ce que** le moyen (18) réglable en position par rapport à la plaque de guidage (4) est disposé sur le côté de la plaque de guidage (4) opposé à la pièce de travail.

9. Scie sauteuse selon la revendication 8, **caractérisée en ce que** sur le côté de la plaque de guidage (4) opposé à la pièce de travail, des composants (30) de préférence métalliques, constituant un boîtier sont ménagés pour recevoir le moyen (18) réglable en position.

10. Scie sauteuse selon une ou plusieurs des revendications 3-9, **caractérisée en ce que** le moyen (18) réglable en position par rapport à la plaque de guidage (4), comporte une surface d'appui (20) et **en ce qu'**une action manuelle exercée sur cette surface d'appui (20) permet d'amener directement le moyen (18) dans sa position orientée (34).

11. Scie sauteuse selon l'une des revendications précédentes, **caractérisée en ce qu'**une pièce de maintien (10) en forme de plaque, de la panne de guidage (8) s'étend avec sa surface plane, perpendiculairement à la surface de la section de guidage (12) en forme de panne, de la panne de guidage (8).

12. Scie sauteuse selon l'une ou plusieurs des revendications précédentes, **caractérisée en ce que** la panne de guidage (8) ou une pièce de maintien (10) de la panne de guidage (8) présente des sections (28) ajustées pour un couplage de forme, qui sont en particulier protubérantes latéralement.

13. Scie sauteuse selon l'une ou plusieurs des revendications 3-12, **caractérisée en ce que** le moyen (18) réglable en position par rapport à plaque de guidage (4) présente une ouverture (40) dans laquelle la panne de guidage (8) peut être engagée et à travers laquelle la panne de guidage, dans sa position escamotée, passe grâce à sa section de guidage (12) en forme de panne.

14. Scie sauteuse selon l'une ou plusieurs des revendications précédentes, **caractérisée en ce que** la panne de guidage (8) peut être engagée perpendiculairement par rapport au plan de la plaque de guidage (4) dans la creusure ou l'évidement (16) et peut s'y loger sans verrouillage.

15. Scie sauteuse selon l'une ou plusieurs des revendications précédentes, **caractérisée en ce que** la panne de guidage (8) ou une pièce de maintien (10) de la panne de guidage (8), dans sa position escamotée et son état imperdable, est agencée pour que la surface soit sensiblement au niveau de la surface orientée vers la pièce de travail de la plaque de guidage (4).
